# EUROPEAN PATENT SPECIFICATION

(11) **EP 2 269 922 B1**
(45) Date of publication and mention of the grant of the patent: **15.08.2012**
(21) Application number: 09164217.3
(22) Date of filing: 30.06.2009
(51) Int. Cl.: B65G 1/07, B65G 57/00

(54) **System to load and unload pallets**
System zum Be- und Entladen von Paletten
Système de chargement et de déchargement de palettes

(43) Date of publication of application: 05.01.2011
(73) Proprietor: Deutsche Post AG, 53113 Bonn (DE)
(72) Inventor: Lemola, Jussi, 02100 Espoo (FI)
(74) Representative: Jostarndt, Hans-Dieter

(56) References cited:
- EP-A- 1 136 394
- EP-A- 1 213 243
- WO-A-03/106304
- JP-A- 2002 293 498

## Description

### Field of the invention

This invention relates to a system suitable to load and unload pallets with objects and to a method for operating the system.

### Background of the invention

Systems to load or unload a pallet with objects comprising a transport belt to carry objects to load or unload the pallet are known. These systems operate at a certain loading or unloading height of pallet and transport means suitable for workers of a particular height. However, workers can have significantly different heights. For example small workers or very tall workers have to work in an environment where the pallet and/or the transport means operate on a height level eventually causing damage to workers health.

### Summary of the invention

It is an object of the present invention to provide a system with a accelerated loading and unloading process preventing damage to workers health.

The object is solved by a system to load pallets with objects or to unload objects stacked on pallets comprising a platform suitable to carry at least one pallet, first lifting means to adjust the vertical position of the platform, a transport means to carry objects to load or unload the pallet with second lifting means to adjust the height of the transport means, and at least one position means suitable to be attached to workers in order to indicate an individual working height of the workers, wherein the vertical position of the platform and the height of the transport means are adjusted by first and second lifting means in accordance to the indicated working height. Working at an optimized working height will protect the health of the workers and simultaneously result in an accelerated loading or unloading process. An optimized working height is achieved, if the desired working height is equal to the level, at which the work has to be done. The level at which the work has to be done is determined by the height of the transport means and the vertical position of the platform. By adjusting the height of the transport means and the vertical position of the platform to a level, which equals the desired working height, the worker works at an optimized working height. At optimized working height, the work can be performed faster and the worker will not exhaust as fast as he would in case of working at a wrong working height. The invention provides a system not only making the simple working steps faster, but also making the overall work more effective. The desired working height differs for workers with different heights, therefore the desired working height is also denoted as the individual working height.

The working height denotes the distance between the floor (or floor level) and usual working area of the worker, preferably slightly below the height of the shoulder of the worker, more preferred a height between shoulder and hip of the worker, most preferred at a position of the elbow in case of a 90° bended arm (upper arm downwards, forearm horizontal). The height of workers may vary between 1,50m and 2,00m requiring an individual adjustment of the vertical position of the platform and the height of the transport means to provide a system allowing the individual worker to work at an optimized working height. The height of the transport means (loading level of the transport means) denotes the distance to the floor or floor level (or height above the floor). The objects are carried on top of the transport means. The movements of objects during loading or unloading the pallet (moving of objects from the pallet on top of the transport means or vice versa) shall be essentially horizontal in order to safe time per carried object and to lower the required manual effort applied by the worker. A manual overloading of the worker may cause damages to the health of the worker. Therefore the working height shall be slightly above the loading level of the transport means and shall correspond to the pallet position. Here the term "slightly above" denotes a distance in the range of a few centimeters, for example 2cm, 5cm or 10cm. The pallet position denotes the position of the topmost surface. This is the pallet surface in case of empty pallets or in case of loaded or partly loaded pallet upper the surface of the topmost object on top of the pallet. The vertical height of the topmost surface of the pallet may be controlled by a photo sensor, e.g. in a photoelectric barrier. People skilled in the art may choose other techniques to determine the topmost surface of the pallet within the scope of this invention. As a result of different heights of the worker, the height of the loading level of the transport means and the pallet has to be adapted to the height of individual workers. The working height can be indicated for individual workers by a position means attached to the workers. The individual height of the worker can be utilized to estimated the desired individual working height. Shoulder, elbow and hip of a worker are approximately at 83%, 67% and 58% of his height. The desired (or optimized) working level may be indicated by the position means itself or derived from the height of the worker according to the previous disclosed dependencies provided as readable data by the position means.

The first and second lifting means may be any suitable means to move the platform and/or the transport means upwards or downwards. In an embodiment the first and/or second lifting means comprise at least one element of the group of hydraulic actuators, electric actuators, spindle, hoist motor. In a preferred embodiment, the second lifting means should be able to lift also heavy pallets of at least 900 kg (loadable weight of an EU pallet) and/or the first lifting means should be able to lift a transport means loaded with objects having a total weight of at least 900kg. People skilled in the art are able to choose suitable lifting means within the scope of this invention. The vertical adjustment of platform and transport means is controlled by the interaction of the position means indicating the desired working height and the first and second lifting means changing the vertical position of the platform and the transport means in accordance to the indication provided by the position means..

The transport means is at least one element of the group of conveyor belts (e.g. rubber conveyor belts), roller belts, chutes or combinations thereof as used in automatic distribution systems as a labor saving system that allows large volumes to move rapidly.

In an embodiment the position means comprises suitable attaching means such as a fixing pin, a clip, a holder, an adhesive layer, a glue layer or a Velcro fastener to be attached to the workers. The clothes of the worker may comprise suitable counterparts, also denoted as attaching means, to allow a secure attachment of the position means to the worker. The counterpart may be adhesive areas, glue areas, areas equipped with Velcro fasteners or the like. The flexible attachment via attachment means and the corresponding counterparts allows a fast change of position means in case of different working places or an easy and fast change of the indication of the desired working height.

In an embodiment the position means is suitable to provide a control signal to first and second lifting means comprising control means suitable to receive the control signal and to control the first and second lifting means to adjust the vertical position of the platform and the height of the transport means according to the control signal. A position means (or position sensor) may be any device that permits a position measurement or provides information about the desired working height and/or the height of the worker. It can either be an absolute position means or a relative one (displacement means). Here the control signal may comprise predetermined information of the desired working height and/or the height of the worker or provides the possibility to detect the position, where the position means is attached to the worker, e.g. the height indicating the desired working height. The control signal may be an electrical, optical or electromagnetic signal or any other kind of suitable signals. The control means is any means suitable to control the first and second lifting means.

In another embodiment the control means comprise a transducer to receive the control signal and to provide an adjustment signal, and preferably further comprising a computer to analyze and/or to process the adjustment signal. The transducer may denote any kind of transducer as a receiver for the control signal provided by the position means further converting the control signal or a physical attribute of the control signal into an adjustment signal to adjust the vertical position of the platform and the height of the transport means. The adjustment signal may be transferred directly to the first and second lifting means or preferably be analyzed and further processed by a computer as part of the control means to control the lifting means in order to adjust the vertical position of the platform and the height of the transport means. The control signal may comprise coded information of the desired working height and/or height of the worker to be processed into the corresponding adjustment signal by a computer or a transducer.

In another embodiment the position means is at least one emitter of the group of IR emitters, RF emitters, light reflectors, LED arrays, or transponders, especially RFID transponders. The position of the position means can be detected, if the position means emits a control signal, for example an optical or electromagnetic signal. The optical or electromagnetic signals can be a radio frequency (RF) signal, an infrared (IR) signal, visible light reflected from a reflector as the position means, a light signal emitted from a light source like a LED or an array of LEDs or a signal emitted from a transponder. The control signal is received by the control means or by receiving means as part of the control means, for example by three or more transducers. The transducers for example are antennas, photo sensors, RF sensors or IR sensors. The signal received by the receiving means or transducers is analyzed in order to determine the position of the position means. This procedure allows to determine of the desired working height for any worker individually. It also enables to change the desired working height, e.g. as a result of getting tired during working at a certain working height. The worker simply attaches the position means at a different location on his clothes. People skilled in the art will apply common techniques to calculate the position of the position means from the control signals received by three or more transducers or other receiving means within the scope of this invention. Alternatively the emitter provides coded information about the desired working height, for example via a RFID transponder. In this case there is no need to indentify the position, where the position means is attached to the worker. However, the desired working position cannot be changed during work, because this would require a change of the information provided by the transponder.

Common transponders receive a signal from another signal emitter and response to this signal on a predetermined frequency, preferably in a coded manner. RFID transponders are one group of transponders used in logistic processes. Such transponders may be LF transponders emitting at frequencies below 135kHz with an operating distance of 1.5m, HF transponders emitting frequencies between 3 and 30 MHz and an operating distance of 1.2m, UHF transponders emitting frequencies of 200MHz to 2GHz with an operating distance of 3-7m and MW transponders emitting at frequencies larger than 2GHz with an operating distance up to 2m. These transponders can be used in different environments. The operating distance is sufficient for the use of these position means within the unload system according to the present invention. The limited operating distance of position means is advantageous, because the system should not be influenced by other control signals indicating other desired working height from position means of workers working at other working places far away. A preferred operating distance is below 3m.

In another embodiment the position means comprises a verification means, preferably a verification button, to confirm the current working height as the desired working height. It may be advantageous not to provide a control signal permanently. In case of a control signal providing working height or height information, it would be disturbing, if workers equipped with position means just passing other transport means or platforms causing adjustments of first and second lifting means without working at these platforms and transport means. The same holds for position means providing position information as the control signal. Even for workers working at the assigned working place, small movements of the worker may be interpreted as a change of the desired working height causing frequent adjustment of platform height and height of the transport means. Such non-desired adjustment would disturb the loading or unloading process. These negative effects are avoided by sending a control signal on demand by using the present verification means. The adjusted vertical position of the platform and the height of the transport means are kept constant until the next control signal is sent out from the position means by applying the verification means.

In another embodiment the control means provides an adjustment signal after the position means provide a first control signal indicating a first working height and subsequently a second control signal indicating a second working height, wherein a difference between first and second working height is above an adjustment threshold. This embodiment is especially advantageous in case of control signals from the position means used for the determination of the position of the position means. Here, movements of the worker are not interpreted as a change of the desired working height in case of small height variation due to normal movements of the worker and subsequently of the position means attached to the worker during loading or unloading the pallet. In case of control signal providing information of the desired working height, a change of the workers with approximately the same height will not cause height adjustments of platform and transport means eventually causing a delay or a disturbance of the loading or unloading process. A suitable adjustment threshold is a distance change of more than 15 cm, preferably more than 10cm. In a preferred embodiment the control means provide an adjustment signal after the second control signal is confirmed by a third control signal received after passing a sufficient time interval also indicating a distance above the adjustment threshold compared to the first control signal. A sufficient time interval may be 10 sec to avoid adjustment caused by workers picking up something from the floor, which usually implies a height variation of the attached position means of more than 15cm.

In an embodiment the first lifting means is arranged in a cavity suitable to lower the vertical position of the platform below a floor level. The height of stacked pallets usually exceeds the height of the loading or unloading level of any neighbored transport means and/or the desired working height. Therefore a cavity is required to lower the platform level beneath the floor level in case of low desired working heights. The floor level denotes the location of the surface of the floor.

In an embodiment the transport means comprises moving means suitable to move the transport means close to the pallet. The objects preferably shall only be pushed or pulled from the pallet towards the transport means or vice versa without any further effort of vertical movements. A worker does not have to support the object to bridge a gap between pallet and transport means, because the gap is closed by moving the transport means towards the pallet. Here, the transport means is at least one element of the group of conveyor belts, roller belts, chutes or combinations thereof. The reduced manual effort is also a contribution to the prevention of damages to the health of the workers.

The invention further relates to a method to load or unload pallets according to the present invention, comprising the steps of
- placing a pallet on top of a platform,
- indicating an individual working height with a position means attached to a worker,
- adjusting the vertical position of the platform and the height of a transport means in accordance to the indicated individual working height, and
- loading or unloading the pallet.

In an embodiment the step of indicating the individual working height comprises the step of attaching the position means to the clothes of the worker with suitable attaching means. In a preferred embodiment the step of indicating the individual working height comprises the step of applying a verification means, preferably pressing a verification button, to confirm the current working height as the desired working height. With such verification means, any undesired adjustment of the platform or the transport means is excluded. Adjustments will only be performed on demand after applying the verification means.

The above discussed embodiments are only examples. Skilled people may consider modifications of said embodiments within the scope of this invention. More details of the invention are shown in the following figures and the detailed description of embodiments.

### Brief description of the drawings

- Fig.1:: worker with individual working height and position means indicating this level.
- Fig.2:: system according to the present invention.
- Fig.3:: system according to the present invention with transport means comprising moving means.

### Detailed description of embodiments

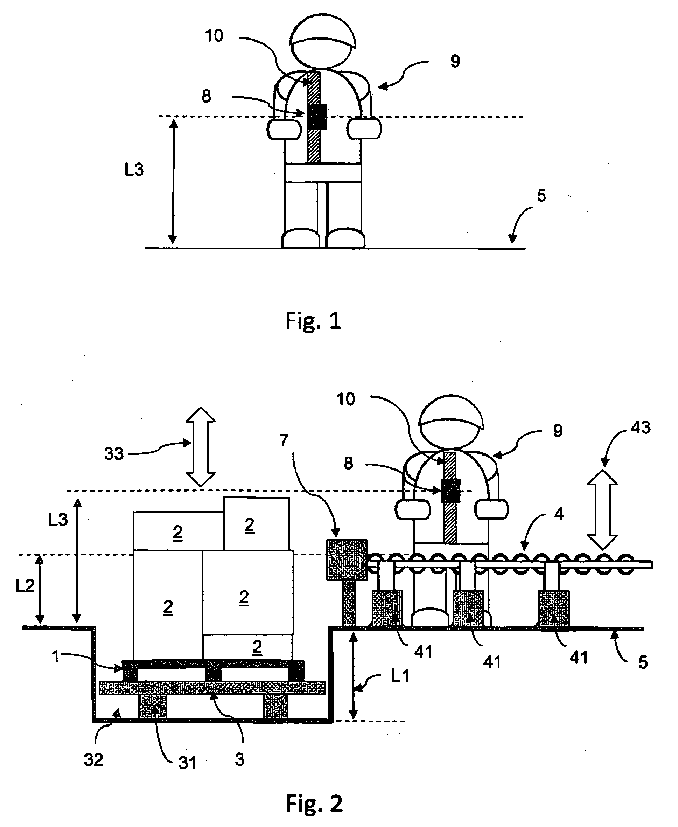

Fig. 1 shows a worker 9 wearing working clothes with a position means 8 attached to the clothes. The position means 8 is attached to the clothes at a height corresponding to the individual (desired) working height L3 of the worker, which absolute values may differ significantly from workers with different height. However, the relative height of the individual working level as a ration of the individual height is very similar between all workers. In this example the position means 8 is attached to the worker 9 by a Velcro fastener 10 on top of the surface of the clothes. Here the Velcro fastener is arranged as a stripe to enable to attach the position means 8 at any desired height. The position of the position means may indicate the individual (desired) working height. Alternatively, the position means provide information (data) about individual working height or the height of the workers used directly to control the first and second lifting means. In this case, the position means can be attached to the worker at any suitable position, for example in a pocket.

Fig.2 shows an example of the system according to the present invention, with a pallet 1 on top of a platform 3 with objects 2 stacked on top of the pallet 1 to be unloaded to the transport means 4. The platform 3 is moved by first lifting means 31 upwards and/or downwards along the moving direction 33 depending on the control signal of the position means 8. Simultaneously or separately the height L2 of the transport means 4 is adjusted along the moving direction 43 of the second lifting means 41 of the transport means 4 in accordance to the control signal of the position means 8. To be able to perform this adjustment for any kind of pallets 1, the lifting means 31 are arranged in a cavity 32 with a suitable depth L1. People skilled in the art are able to choose L1 in accordance to the known common pallet sizes and heights. The adjustment by the first and second lifting means 31, 41 avoid negative impacts on the health of the workers 9 able to work at the desired working height L3. The system comprises control means 7 suitable to receive the control signal from the position means 8. The control means 7 may be on one side of the pallet 1, or on two or more sides of the pallet 1. In this example, the control means 7 are arranged at the transport means 4. In other embodiments there may be more control means to determine the position of the position means 8. The control means 7 controls the first and second lifting means 31, 41.

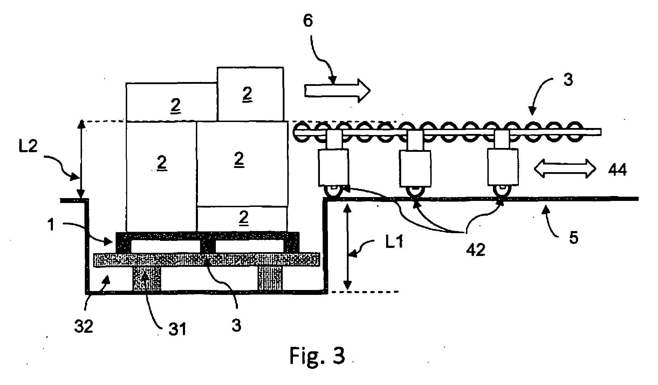

Fig. 3 shows another embodiment of the system according to the present invention, where the transport means 4 is not fixed to the floor 5, but can be moved towards 44 the pallet 1 to load or unload the pallet 1 and backwards 44 after completed loading or unloading of the pallet 1 in order to replace the fully loaded or empty pallet 1 by another pallet. The moving means 42 in order to move the transport means 4 may comprise any suitable moving means, e.g. rolls, wheels, guide rails or tracks. The moving means may allow moving directions 44 in a one dimensional or two dimensional manner. The position means and the control means are not shown here for ease of understanding of the feature of movable transport means 4.

The shown embodiments must not be considered as limitation of the invention. The discussed embodiments are only examples of the present invention. People skilled in the art may consider alternative embodiments of the previously disclosed invention still falling into the scope of this invention.

### LIST OF NUMERALS

- 1: pallet
- 2: objects
- 3: platform
- 31: first lifting means
- 32: cavity for first lifting means
- 33: moving directing of first lifting means
- 4: transport means
- 41: second lifting means
- 42: moving means of transport means
- 43: moving direction of the second lifting means
- 44: moving direction to move the transport means
- 5: floor level
- 6: unload direction to unload objects
- 7: control means
- 8: position means
- 9: worker
- 10: attaching means
- L1: distance between floor level and bottom level of cavity for first lifting means
- L2: height of the transport means
- L3: individual working height

## Claims

1. A system to load pallets (1) with objects (2) or to unload objects (2) stacked on pallets (1) comprising a platform (3) suitable to carry at least one pallet (1), first lifting means (31) to adjust the vertical position of the platform (3), a transport means (4) to carry objects (2) to load or unload the pallet (1) with second lifting means (41) to adjust the height (L2) of the transport means (4), and at least one position means (8) suitable to be attached to workers (9) in order to indicate an individual working height (L3) of the workers (9), wherein the vertical position of the platform (3) and the height (L2) of the transport means (4) are adjusted by the first and second lifting means 31, 41 in accordance to the indicated working height (L3).

2. The system according to claim 1, **characterized in that** the first and/or second lifting means (31, 41) comprises at least one element of the group of hydraulic actuators, electric actuators, spindle, hoist motor.

3. The system according to claim 1or 2, **characterized in that** the position means (8) comprises suitable attaching means such as a fixing pin, a clip, a holder, an adhesive layer, a glue layer or a Velcro fastener, to be attached to the worker (9).

4. The system according to any of the preceding claims, **characterized in that** the position means (8) is suitable to provide a control signal to the first and second lifting means (31, 41) comprising control means (7) suitable to receive the control signal and to control the first and second lifting means (31, 41) to adjust the vertical position of the platform (3) and the height (L2) of the transport means (4) in accordance to the control signal.

5. The system according to claim 4, **characterized in that** the control means (7) comprise a transducer to receive the control signal and to provide an adjustment signal, and preferably further comprising a computer to analyze and/or to process the adjustment signal.

6. The system according to any of the preceding claims, **characterized in that** the position means (8) is at least one emitter of the group of IR emitters, RF emitter, light reflectors, LED arrays, or transponder, especially RFID transponder.

7. The system according to any preceding claim, **characterized in that** the position means (8) comprises a verification means, preferably a verification button, to confirm the current working height as the desired working height.

8. The system according to claim 5, **characterized in that** the control means (7) provides an adjustment signal after the position means (8) provide a first control signal indicating a first working height (L3) and subsequently a second control signal indicating a second working height (L3), wherein a difference between first and second working height is above an adjustment threshold.

9. The system according to claim 8; **characterized in that** the control means (7) provide an adjustment signal after the second control signal is confirmed by a third control signal received after passing sufficient time interval also indicating a distance above the adjustment threshold compared to the first control signal.

10. The system according to any of the preceding claims, **characterized in that** the first lifting means (31) is arranged in a cavity (32) suitable to lower the vertical position of the platform (3) below a floor level (5).

11. The system according to any of the preceding claims, **characterized in that** the transport means (4) is at least one element of the group of conveyor belt, roller belt, chute or combinations thereof.

12. The system according to any of the preceding claims, **characterized in that** transport means (4) comprises moving means (42) suitable to move the transport means (4) close to the pallet (1).

13. Method to unload a pallet (1) using an unload system according to claim 1, comprising the steps of
- placing a pallet (1) on top of a platform (3),
- indicating an individual working height (L3) with a position means (8) attached to a worker (9),
- adjusting the vertical position of the platform (3) and the height (L2) of the transport means (4) to the indicated individual working height (L3), and
- loading or unloading the pallet (1).

14. Method to unload a pallet (1) according to claim 13, **characterized in that** the step of indicating the individual working height (L3) comprises the step of attaching the position means (8) to the clothes of the worker (9) with suitable attaching means (10).

15. Method to unload a pallet (1) according to claim 13 or 14, **characterized in that** the step of indicating the individual working height (L2) comprises the step of applying a verification means, preferably pressing a verification button, to confirm the current working height as the desired working height (L3)..

## Patentansprüche

1. System zum Beladen von Paletten (1) mit Objekten (2) oder zum Abladen von Objekten (2), die auf Paletten (1) gestapelt sind, umfassend eine Plattform(3), die geeignet ist, mindestens eine Palette (1) zu tragen, erste Hubmittel (31) zum Anpassen der senkrechten Position der Plattform (3), ein Transportmittel (4) zum Tragen von Objekten (2), um die Palette (1) zu beladen oder entladen, mit zweiten Hubmitteln (41) zum Anpassen der Höhe (L2) des Transportmittels (4), und mindestens ein Positionsmittel (8), das geeignet ist, an Arbeitskräften (9) befestigt zu werden, um eine individuelle Arbeitshöhe (L3) der Arbeitskräfte (9) anzugeben, wobei die senkrechte Position der Plattform (3) und die Höhe (L2) des Transportmittels (4) mit dem ersten und zweiten Hubmittel (31, 41) entsprechend der angegebenen Arbeitshöhe (L3) angepasst werden.

2. System nach Anspruch 1, **dadurch gekennzeichnet, dass** das erste und/oder zweite Hubmittel (31, 41) mindestens ein Element aus der Gruppe hydraulischer Stellelemente, elektrischer Stellelemente, Spindel, Aufzugmotor umfasst.

3. System nach Anspruch 1 oder 2, **dadurch gekennzeichnet, dass** das Positionsmittel (8) geeignete Befestigungsmittel wie einen Befestigungsstift, eine Klammer, einen Halter, eine Klebstoffschicht, eine Leimschicht oder einen Klettverschluss umfasst, die an der Arbeitskraft (9) zu befestigen sind.

4. System nach einem der vorhergehenden Ansprüche, **dadurch gekennzeichnet, dass** das Positionsmittel (8) geeignet ist, ein Steuersignal an das erste und zweite Hubmittel (31, 41) zu liefern, umfassend Steuermittel (7), die geeignet sind, das Steuersignal zu empfangen und das erste und zweite Hubmittel (31, 41) zu steuern, um die senkrechte Position der Plattform (3) und die Höhe (L2) des Transportmittels (4) entsprechend dem Steuersignal anzupassen.

5. System nach Anspruch 4, **dadurch gekennzeichnet, dass** die Steuermittel (7) einen Wandler umfassen, um das Steuersignal zu empfangen und ein Anpassungssignal zu liefern, und vorzugsweise ferner einen Computer umfassen, um das Anpassungssignal zu analysieren und/oder zu verarbeiten.

6. System nach einem der vorhergehenden Ansprüche, **dadurch gekennzeichnet, dass** das Positionsmittel (8) mindestens ein Sender aus der Gruppe der IR-Sender, HF-Sender, Lichtreflektoren, LED-Anordnungen, oder Transponder, insbesondere RFID-Transponder, ist.

7. System nach einem vorhergehenden Anspruch, **dadurch gekennzeichnet, dass** das Positionsmittel (8) ein Bestätigungsmittel umfasst, vorzugsweise einen Bestätigungsknopf, um die aktuelle Arbeitshöhe als gewünschte Arbeitshöhe zu bestätigen.

8. System nach Anspruch 5, **dadurch gekennzeichnet, dass** das Steuermittel (7) ein Anpassungssignal liefert, nachdem die Positionsmittel (8) ein erstes Steuersignal geliefert haben, das eine erste Arbeitshöhe (L3) angibt, und anschließend ein zweites Steuersignal, das eine zweite Arbeitshöhe (L3) angibt, wobei der Unterschied zwischen der ersten und zweiten Arbeitshöhe über einer Anpassungsschwelle liegt.

9. System nach Anspruch 8, **dadurch gekennzeichnet, dass** die Steuermittel (7) ein Anpassungssignal liefern, nachdem das zweite Steuersignal durch ein drittes Steuersignal bestätigt ist, das empfangen wird, nachdem ein ausreichendes Zeitintervall vergangen ist, und auch einen Abstand über der Anpassungsschwelle verglichen mit dem ersten Steuersignal angibt.

10. System nach einem der vorhergehenden Ansprüche, **dadurch gekennzeichnet, dass** das erste Hubmittel (31) in einem Hohlraum (32) angeordnet ist, der geeignet ist, die senkrechte Position der Plattform (3) unter ein Bodenniveau (5) abzusenken.

11. System nach einem der vorhergehenden Ansprüche, **dadurch gekennzeichnet, dass** das Transportmittel (4) mindestens ein Element aus der Gruppe Förderband, Rollenband, Rutsche oder Kombinationen daraus ist.

12. System nach einem der vorhergehenden Ansprüche, **dadurch gekennzeichnet, dass** das Transportmittel (4) Bewegungsmittel (42) umfasst, die geeignet sind, das Transportmittel (4) nahe an die Palette (1) zu bewegen.

13. Verfahren zum Entladen einer Palette (1) unter Verwendung eines Entladesystems nach Anspruch 1, das folgende Schritte umfasst:
- Platzieren einer Palette (1) oben auf eine Plattform (3),
- Angeben einer individuellen Arbeitshöhe (L3) mit einem Positionsmittel (8), das an einer Arbeitskraft (9) befestigt ist,
- Anpassen der senkrechten Position der Plattform (3) und der Höhe (L2) des Transportmittels (4) an die angegebene individuelle Arbeitshöhe (L3) und Beladen oder Entladen der Palette (1).

14. Verfahren zum Entladen einer Palette (1) nach Anspruch 13, **dadurch gekennzeichnet, dass** der Schritt des Angebens der individuellen Arbeitshöhe (L3) den Schritt des Befestigens des Positionsmittels (8) an der Kleidung der Arbeitskraft (9) mit geeigneten Befestigungsmitteln (10) umfasst.

15. Verfahren zum Entladen einer Palette (1) nach Anspruch 13 oder 14, **dadurch gekennzeichnet, dass** der Schritt des Angebens der individuellen Arbeitshöhe (L2) den Schritt des Verwendens eines Bestätigungsmittels umfasst, vorzugsweise das Drücken eines Bestätigungsknopfs, um die aktuelle Arbeitshöhe als gewünschte Arbeitshöhe (L3) zu bestätigen.

## Revendications

1. Système pour charger des palettes (1) avec des objets (2) ou pour décharger des objets (2) empilés sur des palettes (1) comprenant une plateforme (3) appropriée pour porter au moins une palette (1), un premier moyen de levage (31) pour régler la position verticale de la plateforme (3), un moyen de transport (4) pour porter des objets (2) pour charger ou décharger la palette (1) avec un second moyen de levage (41) pour régler la hauteur (L2) du moyen de transport (4), et au moins un moyen de position (8) approprié pour être attaché aux opérateurs (9) afin d'indiquer une hauteur de travail individuelle (L3) des opérateurs (9), sachant que la position verticale de la plateforme (3) et la hauteur (L2) du moyen de transport (4) sont réglées par les premier et second moyens de levage (31, 41) selon la hauteur de travail (L3) indiquée.

2. Système selon la revendication 1, **caractérisé en ce que** les premier et/ou second moyens de levage (31, 41) comprennent au moins un élément du groupe du actionneurs hydrauliques, actionneurs électriques, arbres, moteurs de levage.

3. Système selon la revendication 1 ou 2, **caractérisé en ce que** le moyen de position (8) comprend un moyen de fixation approprié tel qu'une broche de fixation, un clip, un support, une couche d'adhésif, une couche de colle ou une attache velcro, à attacher à l'opérateur (9).

4. Système selon l'une quelconque des revendications précédentes, **caractérisé en ce que** le moyen de position (8) est approprié pour fournir un signal de commande aux premier et/ou second moyens de levage (31, 41) comprenant un moyen de commande (7) approprié pour recevoir le signal de commande et pour commander les premier et/ou second moyens de levage (31, 41) pour régler la position verticale de la plateforme (3) et la hauteur (L2) du moyen de transport (4) en fonction du signal de commande.

5. Système selon la revendication 4, **caractérisé en ce que** le moyen de commande (7) comprend un transducteur pour recevoir le signal de commande et pour fournir un signal de réglage et comprenant de préférence un ordinateur pour analyser et/ou traiter le signal de réglage.

6. Système selon l'une quelconque des revendications précédentes, **caractérisé en ce que** le moyen de position (8) est au moins un émetteur du groupe des émetteurs IR, émetteurs RF, réflecteurs de lumière, arrangement de DEL, ou transpondeurs, particulièrement transpondeurs RFID.

7. Système selon l'une quelconque des revendications précédentes, **caractérisé en ce que** le moyen de position (8) comprend un moyen de vérification, de préférence une touche de vérification, pour confirmer la hauteur de travail actuelle comme étant la hauteur de travail souhaitée.

8. Système selon la revendication 5, **caractérisé en ce que** le moyen de commande (7) fournit un signal de réglage après que le moyen de position (8) a fourni un premier signal de commande indiquant une première hauteur de travail (L3) et ensuite un deuxième signal de commande indiquant une seconde hauteur de travail (L3), sachant qu'une différence entre les première et seconde hauteurs de travail est au-dessus d'un seuil de réglage.

9. Système selon la revendication 8, **caractérisé en ce que** le moyen de commande (7) fournit un signal de réglage après que le deuxième signal de commande est confirmé par un troisième signal de commande après qu'un intervalle de temps suffisant soit passé indiquant également une distance au-dessus du seuil de réglage en comparaison avec le premier signal de commande.

10. Système selon l'une quelconque des revendications précédentes, **caractérisé en ce que** le premier moyen de levage (31) est agencé dans une cavité (32) appropriée pour baisser la position verticale de la plateforme (3) au-dessous du niveau du sol (5).

11. Système selon l'une quelconque des revendications précédentes, **caractérisé en ce que** le moyen de transport (4) est au moins un élément du groupe des courroies de convoyeur, courroies à rouleaux, goulottes ou des combinaisons de celles-ci.

12. Système selon l'une quelconque des revendications précédentes, **caractérisé en ce que** le moyen de transport (4) comprend un moyen de déplacement (42) approprié pour déplacer le moyen de transport (4) près de la palette (1).

13. Procédé de déchargement d'une palette (1) utilisant un système de déchargement selon la revendication 1, comprenant les étapes de
- placer une palette (1) sur le dessus d'une plateforme (3),
- indiquer une hauteur de travail individuelle (L3) avec un moyen de position (8) attaché à un opérateur (9),
- régler la position verticale de la plateforme (3) et la hauteur (L2) du moyen de transport (4) à la hauteur de travail individuelle (L3) indiquée, et charger ou décharger la palette (1).

14. Procédé de déchargement d'une palette (1) selon la revendication 13, **caractérisé en ce que** l'étape d'indication de la hauteur de travail individuelle (L3) comprend l'étape d'attacher le moyen de position (8) aux vêtements de l'opérateur (9) avec un moyen d'attache (10) approprié.

15. Procédé de déchargement d'une palette (1) selon la revendication 13 ou 14, **caractérisé en ce que** l'étape d'indiquer la hauteur de travail individuelle (L2) comprend l'étape d'appliquer un moyen de vérification, de préférence d'appuyer sur une touche de vérification, pour confirmer la hauteur de travail actuelle comme étant la hauteur de travail souhaitée (L3).
